# EUROPEAN PATENT SPECIFICATION

(11) **EP 4 122 170 B1**
(45) Date of publication and mention of the grant of the patent: **21.05.2025**
(21) Application number: 20925209.7
(22) Date of filing: 16.03.2020
(51) Int. Cl.: H04L 41/0895, H04L 41/14, H04L 41/40, H04L 41/5054, H04L 43/08, H04L 43/20, H04W 24/08, H04W 24/04, H04W 88/18, H04L 41/0806

(54) **METHOD, SYSTEM AND NETWORK NODE FOR GENERATING A NETWORK SERVICE MONITORING MODEL**
VERFAHREN, SYSTEM UND NETZWERKKNOTEN ZUR ERZEUGUNG EINES NETZWERKDIENSTÜBERWACHUNGSMODELLS
PROCÉDÉ, SYSTÈME ET N?UD DE RÉSEAU DESTINÉS À GÉNÉRER UN MODÈLE DE CONTRÔLE DE SERVICES DE RÉSEAU

(43) Date of publication of application: 25.01.2023
(73) Proprietor: Telefonaktiebolaget LM ERICSSON (PUBL), 16483 Stockholm (SE)
(72) Inventor: LACHOS, Danny, 13084-639 Campinas, SP (BR); SARAIVA DE SOUSA, Nathan, 64003-075 Teresina, PI (BR); GOMES DA SILVA, Pedro, 13339-545 Indaiatuba (BR); ESTEVE ROTHENBERG, Christian, 13272-799 Valinhos (BR)
(74) Representative: Murgitroyd & Company
(86) International application number: PCT/SE2020/050271
(87) International publication number: WO 2021/188021

(56) References cited:
- EP-A1- 2 090 023
- US-A1- 2010 110 933
- US-A1- 2017 041 201
- US-A1- 2017 250 892
- US-A1- 2019 363 926
- US-A1- 2020 007 413
- US-B1- 10 560 353
- PRISCILA CEDILLO ET AL: "Towards Monitoring Cloud Services Using Models@run.time", RESEARCH GATE, 1 January 2014 (2014-01-01), XP055534283, DOI: 10.13140/2.1.3001.7286
- BAI X ET AL: "Model-based monitoring and policy enforcement of services", SIMULATION MODELLING PRACTICE AND THEORY, ELSEVIER, AMSTERDAM, NL, vol. 17, no. 8, 1 September 2009 (2009-09-01), pages 1399 - 1412, XP026391665, ISSN: 1569-190X, [retrieved on 20090621]
- DIAZ GLADYS ET AL.: "Towards information modeling for a QoS- aware support in the lifecycle of virtual networks", 2018 28TH INTERNATIONAL TELECOMMUNICATION NETWORKS AND APPLICATIONS CONFERENCE (ITNAC, 21 November 2018 (2018-11-21), XP033499896

## Description

### TECHNICAL FIELD

The present disclosure pertains to the field of communication systems. More particularly, the present disclosure pertains to a method, system and network node for generating a network service monitoring model for a requested network service.

### BACKGROUND

Network management plays a crucial role in controlling the lifecycle of network elements and services. Traditional network management methods consist of monitoring individual network devices such as access points, switches, and routers, usually by decomposing high-level monitoring policies into low-level configurations of devices through a command line interface or an application protocol interface supplied by manufacturers. However, such an approach is not adequate for dynamic systems that demand increased flexibility and automation in the management of their services.PRISCILA CEDILLO ET AL: "Towards Monitoring Cloud Services Using Models@run.time", 1 January 2014 discloses a meta-model used by a Monitoring Model Generation task; EP 2 090 023 A1 discloses the principle of capturing information about the domain of a service and its behaviour characteristics by using modelling languages supporting formal ontologies based on Description Logics and/or Frame Logics; and DIAZ GLADYS et al.: "Towards information modeling for a QoS- aware support in the lifecycle of virtual networks", 2018 28th International Telecommunication Networks and Applications Conference (ITNAC, 21 November 2018 discloses a QoS-aware information model.

With networks becoming more automated and subject to dynamical changes and reconfiguration, e.g. based on of virtualization of networks functions, nodes etc., new types of issues and requirements are introduced in relation to network monitoring.

To this end, problems arise in relation to present solutions in meeting requirements of network monitoring.

### SUMMARY

An object is to provide a method, a control unit and network node, which seek to mitigate, alleviate, or eliminate one or more deficiencies in the art.

This object is obtained by a method, a system and a network node for generating a network service monitoring model for a requested network service.

According to a first aspect, a method is provided for generating a network service monitoring model for a requested network service. In the method an information model is received identifying measurable metrics in relation to a network in which the requested network service is to be deployed. Based on the received information model, network elements and measurable metrics in relation to the network elements for monitoring the requested network service are determined. Based on the determined network elements and measurable metrics in relation to the network elements, an ontology schema is generated identifying the measurable metrics in relation to the network elements, and conditions and arguments in relation to the measurable metrics in relation to the network elements. A service deployment model for the requested network service is received, the service deployment model identifying a type of network service, constraints and points of connections for the requested network service. Based on the generated ontology schema and the received service deployment model, the network service monitoring model having conditions in relation to numerical values of the measurable metrics in relation to the network elements is generated. The network service monitoring model is transmitted to an orchestrator for instantiation in the network in which the requested network service is to be deployed.

In embodiments, the method further comprises receiving a service level agreement identifying measurable metrics and conditions in relation to the measurable metrics. Determining the network elements and the measurable metrics in relation to the network elements for monitoring the requested network service is further based on the received service level agreement.

In embodiments, the method further comprises transmitting the service deployment model to an orchestrator for instantiation in the network in which the requested network service is to be deployed.

In embodiments, the network elements comprise one or more of a virtual network function, a physical network function, a cloud-native network function, and a virtual link.

In embodiments, the measurable metrics in relation to the network elements comprise one or more of network and service quality metrics such as packet loss, throughput, delay, bit rate, and stall duration, and wherein the network monitoring model comprises conditions in relation to the one or more network and service measurable metrics.

In embodiments, the method further comprises receiving the network service monitoring model in an orchestrator, and instantiating the received network service monitoring model in the network in which the requested network service is to be deployed.

According to a second aspect, a system is provided for generating a network service monitoring model for a requested network service. The system comprises a monitoring model generator adapted to receive, from an information model repository, an information model identifying measurable metrics in relation to a network in which the requested network service is to be deployed. The monitoring model generator is further adapted to determine, based on the received information model, network elements and measurable metrics in relation to the network elements for monitoring the requested network service. The monitoring model generator is further adapted to generate, based on the network elements and the determined measurable metrics in relation to the network elements, an ontology schema identifying the measurable metrics in relation to the network elements, and conditions and arguments in relation to the measurable metrics in relation to the network elements. The monitoring model generator is further adapted to receive a service deployment model for the requested network service, the service deployment model identifying a type of network service, constraints and points of connections for the requested network service. The monitoring model generator is further adapted to generate, based on the generated ontology schema and the received service deployment model, the network service monitoring model having conditions in relation to numerical values of the measurable metrics in relation to the network elements. The monitoring model generator is further adapted to transmit the network service monitoring model to an orchestrator for instantiation in the network in which the requested network service is to be deployed.

In embodiments, the monitoring model generator is further adapted to receive, from an operator, a service level agreement identifying measurable metrics and conditions in relation to the measurable metrics. The network elements and the measurable metrics in relation to the network elements for monitoring the requested network service are determined further based on the received service level agreement.

In embodiments, the system further comprises a deployment model generator adapted to transmit the service deployment model to an orchestrator for instantiation in the network in which the requested network service is to be deployed.

In non-claimed embodiments, the network elements comprise one or more of a virtual network function, a physical network function, a cloud-native network function, and a virtual link.

In non-claimed embodiments, the measurable metrics in relation to the network elements comprise one or more of network and service quality metrics such as packet loss, throughput, delay, bit rate, and stall duration, and wherein the network monitoring model comprises conditions in relation to the one or more of network and service measurable metrics.

In non-claimed embodiments, the system further comprises an orchestrator adapted to receive the network service monitoring model and instantiate the received network service monitoring model in the network in which the requested network service is to be deployed.

According to a third aspect, a network node is provided for generating a network service monitoring model for a requested network service. The network node comprises processing circuitry, and a memory, said memory containing instructions executable by said processing circuitry, whereby the network node is operative to receive an information model identifying measurable metrics in relation to a network in which the requested network service is to be deployed. The network node is further operative to determine, based on the received information model, network elements and measurable metrics in relation to the network elements for monitoring the requested network service. The network node is further operative to generate, based on the network elements and the determined measurable metrics in relation to the network elements, an ontology schema identifying the measurable metrics in relation to the network elements, and conditions and arguments in relation to the measurable metrics in relation to the network elements. The network node is further operative to receive a service deployment model for the requested network service, the service deployment model identifying a type of network service, constraints and points of connections for the requested network service. The network node is further operative to generate, based on the generated ontology schema and the received service deployment model, the network service monitoring model having conditions in relation to numerical values of the measurable metrics in relation to the network elements. The network node is further operative to transmit the service deployment model to an orchestrator for instantiation in the network in which the requested network service is to be deployed.

In embodiments, the network node of the third aspect is further operative to receive a service level agreement identifying measurable metrics and conditions in relation to the measurable metrics. The network elements and the measurable metrics in relation to the network elements for monitoring the requested network service are determined further based on the received service level agreement.

In embodiments, the network elements comprise one or more of a virtual network function, a physical network function, a cloud-native network function, and a virtual link.

In embodiments, the measurable metrics in relation to the network elements comprise one or more of network and service quality metrics such as packet loss, throughput, delay, bit rate, and stall duration, and wherein the network monitoring model comprises conditions in relation to the one or more of the network and service measurable metrics.

According to a fourth aspect, a computer program is provided, comprising instructions which, when executed by processing circuitry, cause the processing circuitry to perform the methods according to the first aspect.

Embodiments of the computer program according to the fourth aspect may for example include features corresponding to the features of any of the embodiments of the method according to the first aspect.

According to a fifth aspect, a computer program product is provided having stored thereon a computer program comprising instructions which, when executed by processing circuitry, cause the processing circuitry to perform the methods according to the first aspect.

Embodiments of the computer program product according to the fifth aspect may for example include features corresponding to the features of any of the embodiments of the method according to the first aspect.

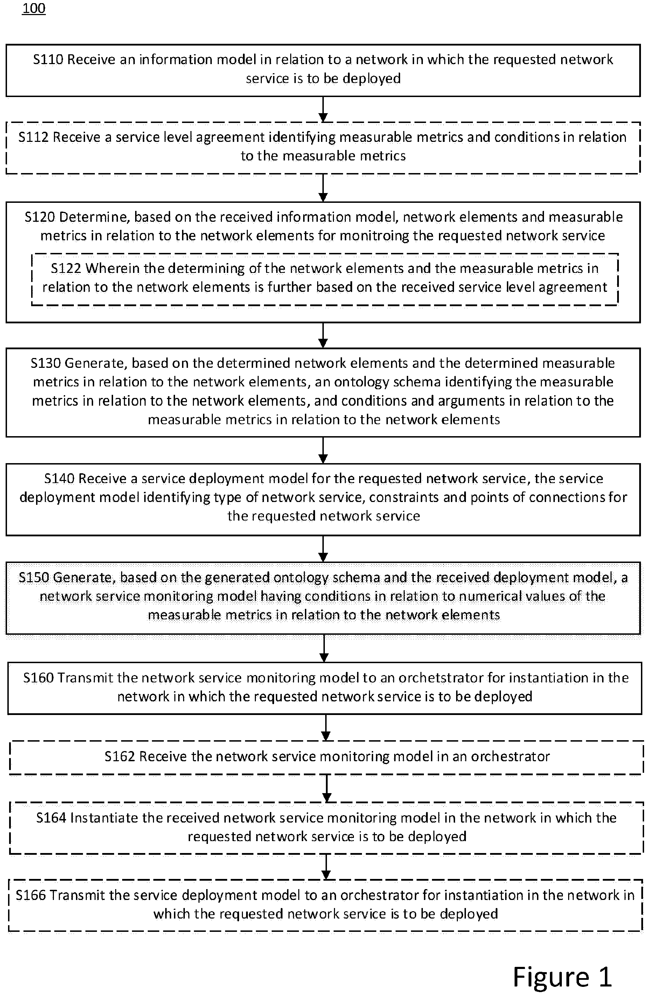

In the following description, the invention is described with particular reference to figures 1 to 4, while the description of the remaining figures is provided for illustrative purposes for a better understanding of the invention.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
Figure 1 is a flowchart illustrating embodiments of a method of the present disclosure.
Figure 2 is a signalling diagram illustrating an exchange of signals in relation to embodiments of the present disclosure.
Figure 3 is a schematic view of a system in which embodiments of the present disclosure may be implemented and a plane structure in relation to components of the system.
Figure 4 is a block diagram illustrating embodiments of a network node of the present disclosure.
Figure 5 illustrates an example of an ontology engine process where an intent-based service request is parsed.
Figure 6 illustrates an example of an ontology schema based on a domain-specific language.
Figure 7 illustrates an example of a network service monitoring model.
Figure 8 illustrates another example of a service monitoring model generated by a monitoring model generator using the 3GPP information model.

### DETAILED DESCRIPTION

Aspects of the present disclosure will be described more fully hereinafter with reference to the accompanying drawings. The control unit and method disclosed herein can, however, be realized in many different forms and should not be construed as being limited to the aspects set forth herein. Like numbers in the drawings refer to like elements throughout.

The terminology used herein is for the purpose of describing particular aspects of the disclosure only, and is not intended to limit the invention. As used herein, the singular forms "a", "an" and "the" are intended to include the plural forms as well, unless the context clearly indicates otherwise.

The example embodiments presented herein are directed towards generating a network service monitoring model for a requested network service.

With networks becoming more automated and subject to dynamical changes and reconfiguration, e.g. based on of virtualization of networks functions, nodes etc., new types of issues are introduced in relation to network monitoring. Such networks introduce new kinds of issues that cannot be detected via standard network monitoring tools.

In the present disclosure solutions in which a network service monitoring model may be generated with more separation from the generation of a service deployment model are disclosed. This provides a more flexible approach for modelling and instantiating network service monitoring and an enables automation of the same. Furthermore, the network service monitoring model and the service deployment model are allowed to work and evolve independently.

Furthermore, instead of individually monitoring all metrics and elements that compose a service (e.g., virtual network functions, virtual links), the proposed solutions enable automated selection of metrics to be evaluated based on the requested network service and a monitoring ontology in relation to the network service to be monitored.

Figure 1 is a flowchart illustrating embodiments of a method 100 for generating a network service monitoring model for a requested network service.

The method 100 illustrated in Figure 1 comprises receiving S110 an information model identifying measurable metrics in relation to a network in which the requested network service is to be deployed.

An information model includes concepts and relationships within a framework for the description of a target service and its attributes (e.g. service KPIs, network QoS parameters). It describes information objects of interest for the operational processes and includes the information/data objects that are exchanged over specific interfaces / reference points. In particular the information model received includes information enabling identification of network elements and measurable metrics in relation to the network elements.

Each standardization body (e.g., 3GPP, ETSI, DMTF, TM Forum) uses its own information models, although some of them are re-used and extended. Examples of such models include "DMTF's Common Information Model (CIM)" developed and maintained by the DMTF's CIM Forum, and "Shared Information/Data (SID) Model" developed and maintained by the TM Forum.

While the term "information model" is used herein, the term is intended to cover also the term "data model" which generally describes managed objects at a lower level of abstraction and include implementation- and protocol-specific details.

Based on the received information model, network elements (and optionally application elements) and measurable metrics in relation to the network elements (and optionally application elements) for monitoring the requested network service are determined (S120). The network elements may for example be one or more of a virtual network function, a physical network function, a cloud-native network function, and a virtual link. The measurable metrics in relation to the network elements may for example be one or more of packet loss, throughput, delay, bit rate, and stall duration.

Based on the determined network elements and measurable metrics in relation to the network elements, an ontology schema is generated S130 identifying the measurable metrics in relation to the network elements, and conditions and arguments in relation to the measurable metrics in relation to the network elements.

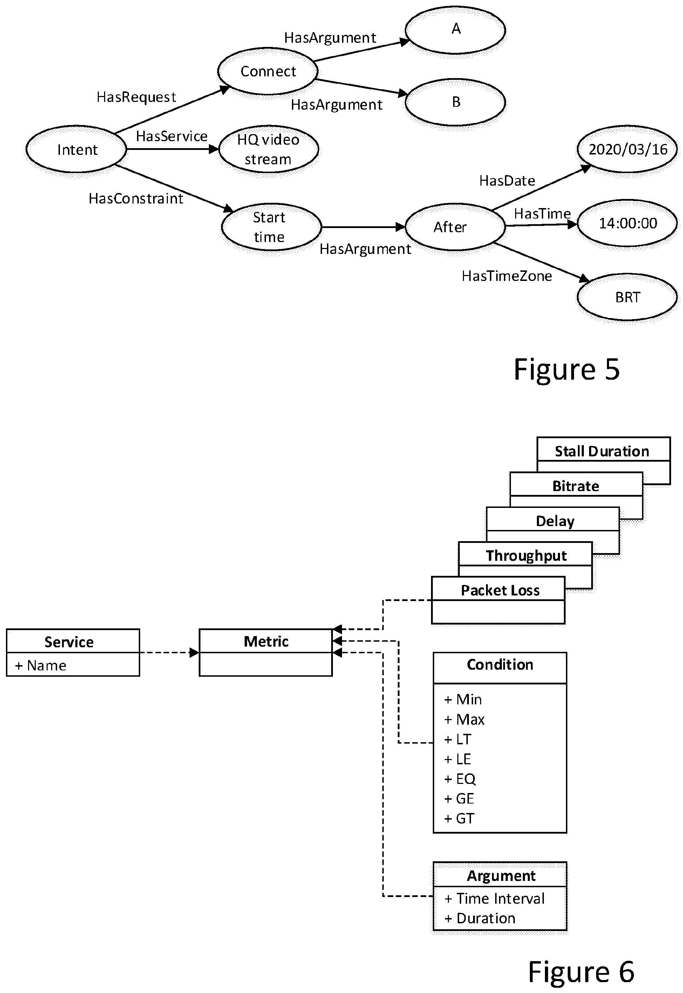

Figure 6 shows an example of an ontology schema based on a domain-specific language (DSL) such as resource description framework (RDF). For a service, metrics are related such as packet loss, throughput, delay, bit rate, and stall duration. For the related metrics conditions are related such as min, max, less than (LT), less than or equal (LE), equal (EQ), greater than or equal (GE), and greater than (GT). Similarly, the related metrics may be related to arguments such as a timer interval or a duration. TOSCA, YANG, and web ontology language (OWL) are other examples of DSLs.

Furthermore, a service deployment model for the requested network service is received S140. The service deployment model identifies a type of network service (e.g., streaming audio and video, voice), constraints (e.g., start time, date) and points of connections for the requested network service. The service deployment model is typically generated separately from the generation of the network service monitoring model.

Based on the generated ontology schema and the received service deployment model, the network service monitoring model is generated S150. The network service monitoring model has conditions in relation to numerical values of the measurable metrics in relation to the network elements. For example, the network service monitoring model may comprise conditions in relation to the one or more of packet loss, throughput, delay, bit rate, and stall duration.

The network service monitoring model is then compiled and represented as a Network Service Descriptor (NSD) (i.e. a template file, whose parameters follow the specifications supported by the orchestrator, e.g., ETSI GS NFV-SOL 006 specification based on ETSI GS NFV-IFA 011 and ETSI GS NFV-IFA 014, or ONAP NSD specification).

The network service monitoring model is then transmitted S160 to an orchestrator for instantiation in the network in which the requested network service is to be deployed.

The service deployment model further typically comprises deployment descriptors identifying network elements for use in instantiation of the service deployment model. Such identified network elements are then used in the network service monitoring model identifying measurable metrics in relation to the identified network elements.

In embodiments, the method further comprises receiving S112 a service level agreement identifying measurable metrics and conditions in relation to the measurable metrics. The network elements and the measurable metrics in relation to the network elements for monitoring the requested network service is then determined further based S122 on the received service level agreement.

SLAs are formal or informal contracts. An SLA is an electronic document that specifies what the customer should expect from service provider through functional or non-functional properties. There is no standard model to create an SLA, but it briefly should consist of a set of measurable metrics, also defined as service level objectives (SLO). An SLO refers to a performance metric and specifies a value or value ranges and unit, for instance, availability ≥ 99%, end-to-end delay between 50 -100 ms.

In embodiments, the method further comprises receiving S162 the network service monitoring model in an orchestrator, and instantiating S164 of the received network service monitoring model in the network in which the requested network service is to be deployed.

In embodiments, the method further comprises transmitting S166 the service deployment model to a further orchestrator for instantiation in the network in which the requested network service is to be deployed.

Figure 1 comprises some operations which are illustrated comprised in solid line boxes and some operations which are illustrated comprised in dashed line boxes. The operations that are comprised in solid line boxes are operations which are comprised in the broadest example embodiment. The operations which are comprised in dashed line boxes are example embodiments which may be comprised in, or a part of, or are further operations which may be taken in addition to the operations of the broader example embodiment. It should be appreciated that these operations need not be performed in any specific order unless otherwise specified, and that not all of the operations need to be performed.

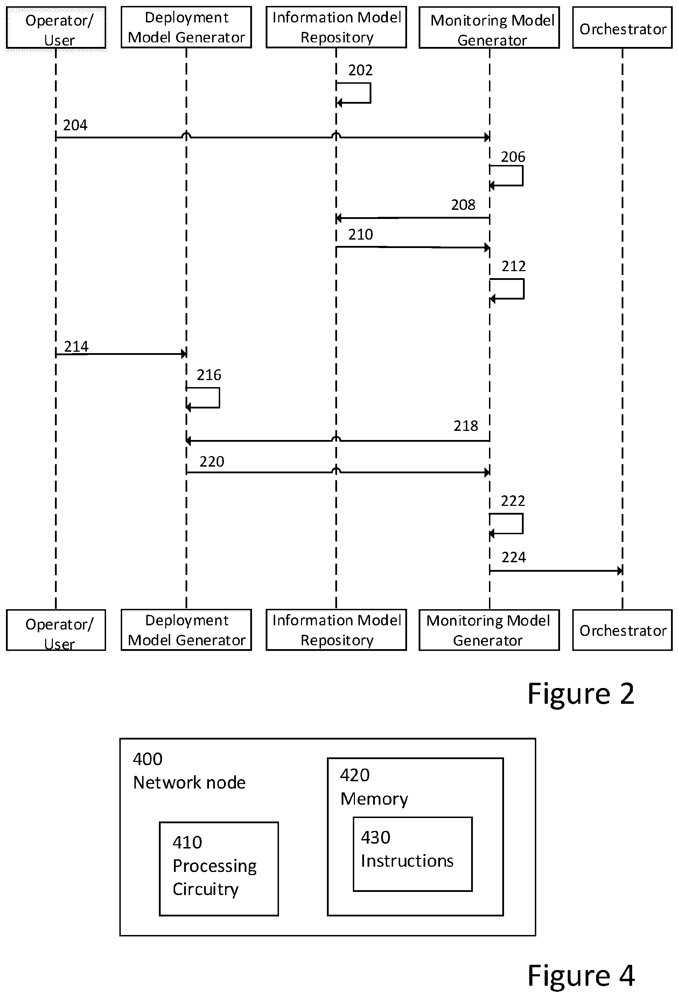

Figure 2 is a signalling diagram illustrating an exchange of signals in relation to embodiments of the present disclosure. Signalling between an operator/user, a deployment model generator, an information model repository, a monitoring model generator and an orchestrator is disclosed. One or more information models are uploaded 202 to the information model repository. Even if not disclosed in figure 2, the operator/user may have the ability to select and specify information model(s) based on their deployed technologies and services, and eventually also configure and fine tune parameters of the information model(s). The interactions of the operator/user with the information model repository can be seen as initial configuration steps and also as a customization to the specificities of the operator/user.

In embodiments, the operator/user sends 204 an SLA to the monitoring model generator as indicated in relation to figure 1. An SLA is an electronic document that specifies what the customer should expect from service provider through functional or non-functional properties.

In an SLA, there are different classes of services levels, e.g. Gold, Silver, and Bronze. The mapping between such classes of SLAs and Quality of Service (QoS) classes are defined for instance by 3GPP TS 23.107 [4], as presented in Table I below.

**Table I**

| **SLA** | **3GPP QoS** | **Examples** |
|---|---|---|
| Gold | Conversational | Voice, video conference |
| | Streaming | Streaming video |
| Silver | Interactive | Web browsing |
| Bronze | Background | Email, download |

The SLA sent from the operator/user to the monitoring model generator, includes service level objectives (SLOs) or Service level indicators (SLIs).

The SLA, SLO, and SLI are related concepts and may be defined according to the following:
- SLA is a contract that the service provider/operator promises customers/users on service availability, performance, etc.
- SLO is a goal that service provider wants to reach.
- SLI is a measurement the service provider uses for the goal.

The service provider needs to collect metrics based on SLI, define thresholds of metrics based on SLO, and monitor the thresholds of metrics so that SLA is upheld. In practical, the SLIs are the metrics in the monitoring system, the SLOs are alerting rules, and the SLAs are the numbers of the monitoring metrics applying to the SLOs.

The SLOs are then generated 206 by means of parsing and extraction from the received SLA.

The monitoring model generator then requests 208 an information model from the information model repository, which in turn responds 210 by providing the requested information model.

The information model repository generally contains different information model templates. Those templates might refer to several industry standards, such as 3GPP SA5, TM Forum, ETSI NFV MANO, OASIS TOSCA. Information model templates might also refer to models specified by projects aligned with open source projects (e.g., ONAP, OSM). The information model includes identification of network elements and measurable metrics in relation to the network elements, which can be used to extract relevant SLOs.

In embodiments, where an SLA is sent from the operator/user to the monitoring model generator, and since SLA-defined SLOs may not always reflect the key monitoring metrics of a network service, the information model may further be used to select/filter (not shown) only relevant SLOs which should be part of an ontology schema.

Examples of SLOs are:
- packet loss < 0.03%
- delay > 150 ms
- bit rate > 1024 mbps
- stall duration < 0.2 ms.

An ontology schema is then generated 212 identifying the measurable metrics in relation to the network elements, and conditions and arguments in relation to the measurable metrics in relation to the network elements.

In addition to the information model and optionally the SLA, a service deployment model is also required to generate the network service monitoring model. The operator/user sends 214 a network service request to the deployment model generator. From the network service request, the deployment model generator generates 216 a service deployment model.

The monitoring model generator then requests 218 the service deployment model from the deployment generator, which in turn provides 220 the service deployment model for the requested network service. The service deployment model identifies a type of network service, constraints and points of connections for the requested network service.

The monitoring model generator then generates 222 the network service monitoring model based on the generated ontology schema and the received service deployment model. The network service monitoring model has conditions in relation to numerical values of the measurable metrics in relation to the network elements.

The monitoring model generator uses a semantic and ontology-based approach based on DSLs to generate an abstract level template (i.e., a network service monitoring model) focused on monitoring of the requested network service.

The network service monitoring model is then transmitted 224 from the monitoring model generator to an orchestrator for instantiation in the network in which the requested network service is to be deployed.

Figure 2 discloses a signalling diagram illustrating example signalling between components of a system according to embodiments. The signalling has been presented in a particular order in the example, but it should be appreciated that the order may be different in other examples, and that, in such other examples, not all of the signalling needs to be performed.

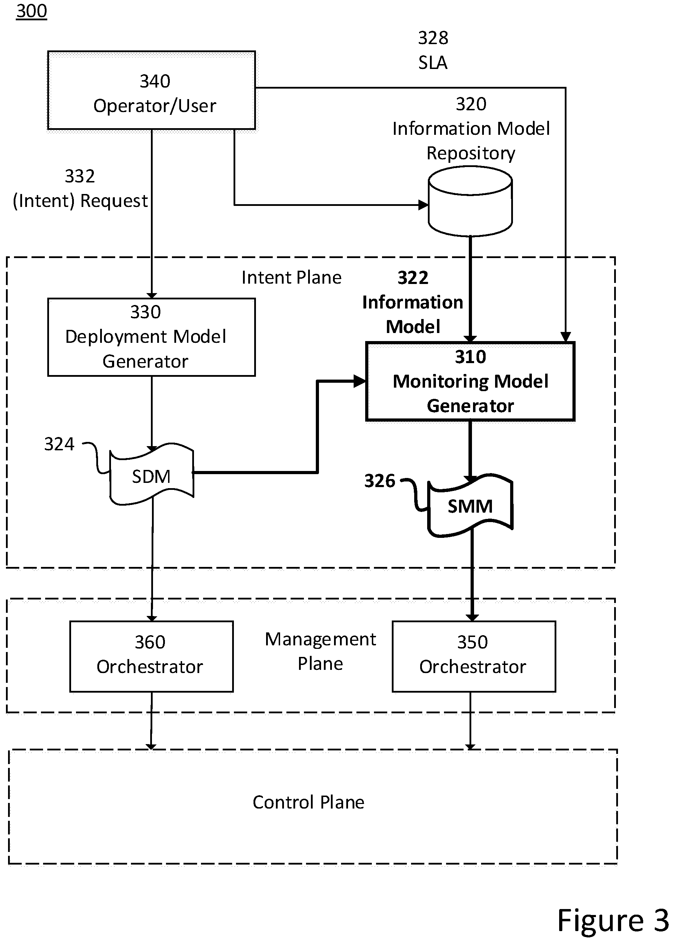

Figure 3 is a schematic view of a system 300 in which embodiments of a system of the present disclosure may be implemented and a plane structure in relation to components of the system. Furthermore, methods described in relation to Figure 1 and signalling described in relation to Figure 2 may be implemented in the system 300 of Figure 3.

The system 300 a monitoring model generator 310 adapted to receive an information model 322 from an information model repository 320 and to receive a service deployment model 324 from a deployment model generator 330. The deployment model generator 330 is adapted to generate the service deployment model 324 based on a network service request 332 from an operator/user 340. The monitoring model generator 310 is further adapted to generate a network service monitoring model 326 and transmit it to an orchestrator 350 for instantiation in the network in which the requested network service is to be deployed. In embodiments, the monitoring model generator 310 is further adapted to receive an SLA 328 from the operator/user 340. The deployment model generator 330 is further adapted to transmit the service deployment model 324 to a further orchestrator 360 for instantiation in the network in which the requested network service is to be deployed. In alternative to using separate orchestrators as shown in Figure 3, the same orchestrator can be used for instantiation of the service deployment model and the service monitoring model. In such an alternative the orchestrator 350 and the further orchestrator 360 would not be separate but the same.

Figure 3 comprises some functional blocks and arrows that are illustrated in bold lines and some functional blocks that are illustrated as non-bold line. The functional blocks and arrows that are illustrated in bold line are comprised in the broadest example embodiment. The functional blocks and arrows that are illustrated as non-bold line boxes are example embodiments that may be comprised in, or a part of, or are further functional blocks and arrows which may be taken in addition to the functional blocks and arrows of the broader example embodiment.

Embodiments of the system of the present disclosure is for example advantageously used in relation to intent-driven management, and/or in relation to closed control loops (CCL).

The concept of intent-driven management is introduced for supporting efficient and faster service delivery through a high level of automation that simplifies the management with minimum intervention from human operators. It means that operators only indicate high-level abstracted service requirements (i.e., their "intents") and the automated system resolves how the intent-based services are executed. The system should be to adapt continuously to meet the desired state.

Intent assurance deals with different functions (monitoring, analysis, planning, and execution) that are necessary to ensure that the network complies with the desired intent-based service. More recently, the implementation of such functions has followed the principles of autonomous CCLs. CCLs establish constant monitoring and SLA verification over the entire lifecycle of an intent-based service instance to assure that it is operating correctly and, if not, to set actions to return to the desired intent.

In embodiments where the network service request 332 is an intent-based request, the deployment model generator 330 comprises an intent processor (not shown). The intent processor parses the intent-based request. An illustrative example of an ontology engine process in an intent processor is shown in Figure 5, where an intent-based request, "I want to stream a full HD video from A to B after 2020/03/16 14:00", is being parsed. From the request, the request to connect is identified and that the connection should be from A to B. Furthermore, the service high quality video is identified. Furthermore, the constraint in relation to the start time is identified and that the constraint is after 14:00:00 on 2020/03/16 Coordinated Universal Time (UTC).

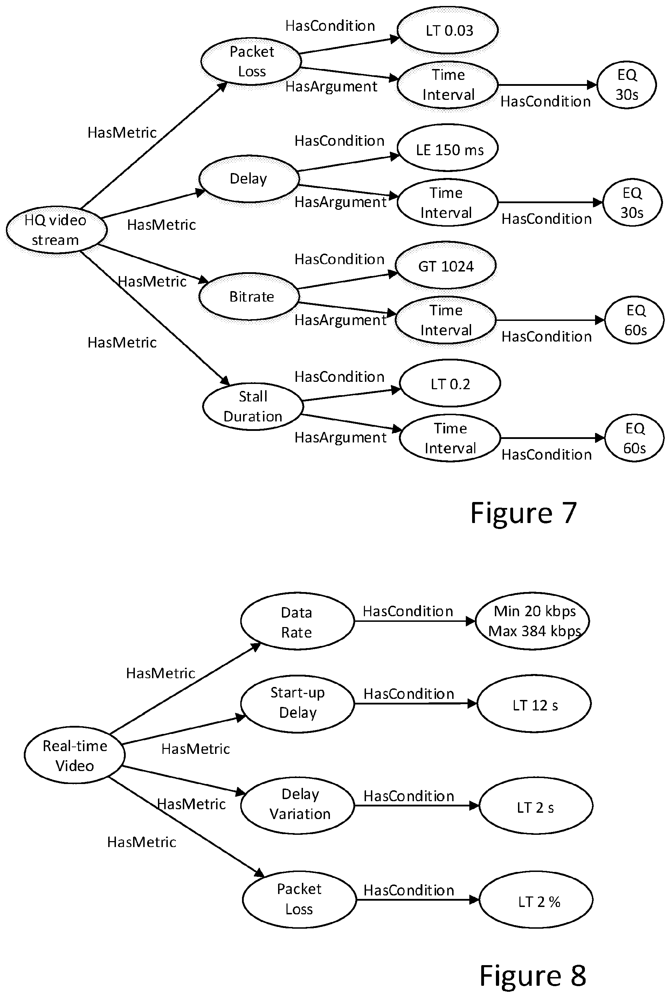

Figure 7 depicts an example of a network service monitoring model for a high quality video stream, such as the one requested in the intent-based request illustrated in Figure 5. However, the example is equally relevant to any network service request that specifies high quality video in relation to a specific information model and optionally SLA.

Figure 8 illustrates a network service monitoring model based for an example in which a 3GPP information model is used. Reference is made to 3GPP TS 23.107, which specifies a list of metrics applicable in the 3GPP system, and to 3GPP TS 22.105, which describes how and what kind of services the user has access to.

In addition to identification of service, measurable metrics and conditions in relation the measurable metrics as shown in Figure 7 and Figure 8, a network service monitoring model transmitted to an orchestrator for instantiation typically also includes related identified network elements as received in a corresponding service deployment model.

An intent-based service is requested 332 by a user 340: "I want to transmit real-time video using mobile networks from point A to B from now." The intent-based request 332 is processed and the intent processor (not shown) of the deployment model generator 330 identifies, e.g. based on parsing as illustrated in relation to Figure 5, that the type of requested service is real-time video. In the example, the user 340 does not send any SLA 328, so the monitoring model generator 310 queries the 3GPP information model 322 and recognizes the network elements and measurable metrics related to such a service. The end-to-end measurable metrics and conditions in relation to their numerical values are:
- Data rate: 20-384 kbps;
- Start-up delay: < 10 sec;
- Delay variation: < 2 sec;
- Packet loss: < 2 %.

Thereby, the monitoring model generator 310 thus generates a network service monitoring model 326 represented in Figure 9. The network service monitoring model 326 is further sent to the orchestrator 350 in the control plane for instantiation.

Figure 4 is a block diagram illustrating embodiments of a network node 400, which may incorporate at least some of the example embodiments discussed above. As shown in Figure 4, the network node 400 comprises processing circuitry 410. The processing circuitry 410 may be any suitable type of computation unit, e.g. a microprocessor, digital signal processor (DSP), field programmable gate array (FPGA), or application specific integrated circuit (ASIC) or any other form of circuitry. It should be appreciated that the processing circuitry need not be provided as a single unit but may be provided as any number of units or circuitry.

The network node 400 further comprises at least one memory unit or circuitry 420 in communication with the processing circuitry 410. The memory 420 is configured to store executable program instructions 430. The memory 420 may be any suitable type of computer readable memory and may be of volatile and/or non-volatile type.

The network node 400 may be included in a communication system.

In an embodiment of the network node 400 illustrated in Figure 4 the memory 420 contains instructions 430 executable by the processing circuitry 410, whereby the embodiment of the network node 400 is operative to perform at least a subset of the steps of the method for generating a network service monitoring model described in relation to Figure 1.

The instructions 430 contained in the memory 420 of figure 4 implement the functionalities of embodiments of the monitoring model generator 310 of figure 3.

Aspects of the disclosure are described with reference to the drawings, e.g., block diagrams and/or flowcharts. It is understood that several entities in the drawings, e.g., blocks of the block diagrams, and also combinations of entities in the drawings, can be implemented by computer program instructions, which instructions can be stored in a computer-readable memory, and also loaded onto a computer or other programmable data processing apparatus. Such computer program instructions can be provided to a processor of a general purpose computer, a special purpose computer and/or other programmable data processing apparatus to produce a machine, such that the instructions, which execute via the processor of the computer and/or other programmable data processing apparatus, create means for implementing the functions/acts specified in the block diagrams and/or flowchart block or blocks.

In some implementations and according to some aspects of the disclosure, the functions or steps noted in the blocks can occur out of the order noted in the operational illustrations. For example, two blocks shown in succession can in fact be executed substantially concurrently or the blocks can sometimes be executed in the reverse order, depending upon the functionality/acts involved. Also, the functions or steps noted in the blocks can according to some aspects of the disclosure be executed continuously in a loop.

In the drawings and specification, there have been disclosed exemplary aspects of the disclosure. However, many variations and modifications can be made to these aspects without substantially departing from the principles of the present disclosure. Thus, the disclosure should be regarded as illustrative rather than restrictive, and not as being limited to the particular aspects discussed above. Accordingly, although specific terms are employed, they are used in a generic and descriptive sense only and not for purposes of limitation.

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatus, modules, systems, and computer program products. It should be appreciated that the example embodiments presented herein may be practiced in any combination with each other.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

The various example embodiments described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

In the drawings and specification, there have been disclosed exemplary embodiments. However, many variations and modifications can be made to these embodiments. Accordingly, although specific terms are employed, they are used in a generic and descriptive sense only and not for purposes of limitation, the scope of the embodiments being defined by the following claims.

## Claims

1. A computer implemented method for generating a network service monitoring model for a requested network service, the method comprising the following steps performed by a monitoring model generator:
receiving (S110) an information model identifying measurable metrics in relation to a network in which the requested network service is to be deployed;
determining (S120), based on the received information model, network elements and measurable metrics in relation to the network elements for monitoring the requested network service;
generating (S130), based on the determined network elements and measurable metrics in relation to the network elements, an ontology schema identifying the measurable metrics in relation to the network elements, and conditions and arguments in relation to the measurable metrics in relation to the network elements;
receiving (S140) a service deployment model for the requested network service, the service deployment model identifying a type of network service, constraints and points of connections for the requested network service;
generating (S150), based on the generated ontology schema and the received service deployment model, the network service monitoring model having conditions in relation to numerical values of the measurable metrics in relation to the network elements; and
transmitting (S160) the network service monitoring model to an orchestrator for instantiation in the network in which the requested network service is to be deployed.

2. The method of claim 1, further comprising the following steps performed by the monitoring model generator:
receiving (S112) a service level agreement identifying measurable metrics and conditions in relation to the measurable metrics,
wherein determining (S120) the network elements and the measurable metrics in relation to the network elements for monitoring the requested network service is further based on the received service level agreement.

3. The method of any one of claims 1 and 2, further comprising the following step performed by a deployment model generator:
transmitting (S166) the service deployment model to an orchestrator for instantiation in the network in which the requested network service is to be deployed.

4. The method of any one of claims 1-3, wherein the network elements comprise one or more of a virtual network function, a physical network function, a cloud-native network function, and a virtual link.

5. The method of any one of claims 1-4, wherein the measurable metrics in relation to the network elements comprise one or more of packet loss, throughput, delay, bit rate, and stall duration, and wherein the network monitoring model comprises conditions in relation to the one or more of packet loss, throughput, delay, bit rate, and stall duration.

6. The method of any one of claims 1-5, further comprising the following steps performed by an orchestrator:
receiving (S162) the network service monitoring model; and
instantiating (S164) of the received network service monitoring model in the network in which the requested network service is to be deployed.

7. A system (300) for generating a network service monitoring model for a requested network service, the system comprising:
a monitoring model generator (310) adapted to:
receive, from an information model repository (320), an information model (322) identifying measurable metrics in relation to a network in which the requested network service is to be deployed;
determine, based on the received information model (322), network elements and measurable metrics in relation to the network elements for monitoring the requested network service;
generate, based on the network elements and the determined measurable metrics in relation to the network elements, an ontology schema identifying the measurable metrics in relation to the network elements, and conditions and arguments in relation to the measurable metrics in relation to the network elements;
receive a service deployment model (324) for the requested network service, the service deployment model (324) identifying a type of network service, constraints and points of connections for the requested network service; and
generate, based on the generated ontology schema and the received service deployment model (324), the network service monitoring model (326) having conditions in relation to numerical values of the measurable metrics in relation to the network elements; and
transmit the network service monitoring model (326) to an orchestrator (350) for instantiation in the network in which the requested network service is to be deployed.

8. The system of claim 7, wherein the monitoring model generator (310) is further adapted to:
receive, from an operator (340), a service level agreement (328) identifying measurable metrics and conditions in relation to the measurable metrics,
wherein the network elements and the measurable metrics in relation to the network elements for monitoring the requested network service are determined further based on the received service level agreement (328).

9. The system of any one of claims 7 and 8, further comprising:
a deployment model generator (330) adapted to:
transmit the service deployment model (324) to a further orchestrator (360) for instantiation in the network in which the requested network service is to be deployed.

10. A network node (400) for generating a network service monitoring model for a requested network service, the network node (400) comprising processing circuitry (410), and a memory (420), said memory (420) containing instructions (430) executable by said processing circuitry (410), whereby said network node (400) is operative to:
receive an information model identifying measurable metrics in relation to a network in which the requested network service is to be deployed;
determine, based on the received information model, network elements and measurable metrics in relation to the network elements for monitoring the requested network service;
generate, based on the network elements and the determined measurable metrics in relation to the network elements, an ontology schema identifying the measurable metrics in relation to the network elements, and conditions and arguments in relation to the measurable metrics in relation to the network elements;
receive a service deployment model for the requested network service, the service deployment model identifying a type of network service, constraints and points of connections for the requested network service;
generate, based on the generated ontology schema and the received service deployment model, the network service monitoring model having conditions in relation to numerical values of the measurable metrics in relation to the network elements; and
transmit the service deployment model to an orchestrator for instantiation in the network in which the requested network service is to be deployed.

11. The network node of claim 10, further operative to:
receive a service level agreement identifying measurable metrics and conditions in relation to the measurable metrics,
wherein the network elements and the measurable metrics in relation to the network elements for monitoring the requested network service are determined further based on the received service level agreement.

12. The network node of any one of claims 10 and 11, wherein the network elements comprise one or more of a virtual network function, a physical network function, a cloud-native network function, and a virtual link.

13. The network node of any one of claims 10-12, wherein the measurable metrics in relation to the network elements comprise one or more of packet loss, throughput, delay, bit rate, and stall duration, and wherein the network monitoring model comprises conditions in relation to the one or more of packet loss, throughput, delay, bit rate, and stall duration.

14. A computer program, comprising instructions (430) which, when executed by processing circuitry (410), cause the processing circuitry (410) to perform the method according to any one of claims 1-6.

15. A computer program product (420) having stored thereon a computer program comprising instructions (430) which, when executed by processing circuitry (410), cause the processing circuitry (410) to perform the method according to any one of claims 1-6.

## Patentansprüche

1. Computerimplementiertes Verfahren zum Generieren eines Netzwerkdienstüberwachungsmodells für einen angeforderten Netzwerkdienst, wobei das Verfahren die folgenden Schritte umfasst, die von einem Überwachungsmodellgenerator ausgeführt werden:
Empfangen (S110) eines Informationsmodells, das messbare Metriken in Bezug auf ein Netzwerk identifiziert, in dem der angeforderte Netzwerkdienst bereitgestellt werden soll;
Bestimmen (S120) von Netzwerkelementen und messbaren Metriken in Bezug auf die Netzwerkelemente, um den angeforderten Netzwerkdienst zu überwachen, basierend auf dem empfangenen Informationsmodell;
Generieren (S130) eines Ontologieschemas, das die messbaren Metriken in Bezug auf die Netzwerkelemente sowie Bedingungen und Argumente in Bezug auf die messbaren Metriken in Bezug auf die Netzwerkelemente identifiziert, basierend auf den bestimmten Netzwerkelementen und messbaren Metriken in Bezug auf die Netzwerkelemente;
Empfangen (S140) eines Dienstbereitstellungsmodells für den angeforderten Netzwerkdienst, wobei das Dienstbereitstellungsmodell einen Netzwerkdiensttyp, Einschränkungen und Verbindungspunkte für den angeforderten Netzwerkdienst identifiziert;
Generieren (S150) des Netzwerkdienstüberwachungsmodells mit Bedingungen in Bezug auf numerische Werte der messbaren Metriken in Bezug auf die Netzwerkelemente basierend auf dem generierten Ontologieschema und dem empfangenen Dienstbereitstellungsmodell; und
Senden (S160) des Netzwerkdienstüberwachungsmodells an einen Orchestrator zur Instanziierung in dem Netzwerk, in dem der angeforderte Dienst bereitgestellt werden soll.

2. Verfahren nach Anspruch 1, ferner umfassend die folgenden Schritte, die von dem Überwachungsmodellgenerator ausgeführt werden:
Empfangen (S112) einer Dienstgütevereinbarung, die messbare Metriken und Bedingungen in Bezug auf die messbaren Metriken identifiziert,
wobei das Bestimmen (S120) der Netzwerkelemente und der messbaren Metriken in Bezug auf die Netzwerkelemente zum Überwachen des angeforderten Netzwerkdiensts ferner auf der empfangenen Dienstgütevereinbarung basiert.

3. Verfahren nach einem der Ansprüche 1 und 2, ferner umfassend den folgenden Schritt, der von einem Bereitstellungsmodellgenerator ausgeführt wird:
Senden (S166) des Dienstbereitstellungsmodells an einen Orchestrator zur Instanziierung in dem Netzwerk, in dem der angeforderte Dienst bereitgestellt werden soll.

4. Verfahren nach einem der Ansprüche 1-3, wobei die Netzwerkelemente eines oder mehrere von einer virtuellen Netzwerkfunktion, einer physischen Netzwerkfunktion, einer Cloud-nativen Netzwerkfunktion und einer virtuellen Verbindung umfassen.

5. Verfahren nach einem der Ansprüche 1-4, wobei die messbaren Metriken in Bezug auf die Netzwerkelemente eines oder mehrere von Paketverlust, Durchsatz, Verzögerung, Bitrate und Stillstanddauer umfassen und wobei das Netzwerküberwachungsmodell Bedingungen in Bezug auf das eine oder die mehreren von Paketverlust, Durchsatz, Verzögerung, Bitrate und Stillstanddauer umfasst.

6. Verfahren nach einem der Ansprüche 1-5, ferner umfassend die folgenden Schritte, die von einem Orchestrator ausgeführt werden:
Empfangen (S162) des Netzwerkdienstüberwachungsmodells; und
Instanziieren (S164) des empfangenen Netzwerkdienstüberwachungsmodells in dem Netzwerk, in dem der angeforderte Dienst bereitgestellt werden soll.

7. System (300) zum Generieren eines Netzwerkdienstüberwachungsmodells für einen angeforderten Netzwerkdienst, wobei das System Folgendes umfasst:
einen Überwachungsmodellgenerator (310), der zu Folgendem ausgelegt ist:
Empfangen eines Informationsmodells (322), das messbare Metriken in Bezug auf ein Netzwerk identifiziert, in dem der angeforderte Netzwerkdienst bereitgestellt werden soll, von einem Informationsmodellrepository (320);
Bestimmen von Netzwerkelementen und messbaren Metriken in Bezug auf die Netzwerkelemente, um den angeforderten Netzwerkdienst zu überwachen, basierend auf dem empfangenen Informationsmodell (322);
Generieren eines Ontologieschemas, das die messbaren Metriken in Bezug auf die Netzwerkelemente sowie Bedingungen und Argumente in Bezug auf die messbaren Metriken in Bezug auf die Netzwerkelemente identifiziert, basierend auf den Netzwerkelementen und den bestimmten messbaren Metriken in Bezug auf die Netzwerkelemente;
Empfangen eines Dienstbereitstellungsmodells (324) für den angeforderten Netzwerkdienst, wobei das Dienstbereitstellungsmodell (324) einen Netzwerkdiensttyp, Einschränkungen und Verbindungspunkte für den angeforderten Netzwerkdienst identifiziert; und
Generieren des Netzwerkdienstüberwachungsmodells (326) mit Bedingungen in Bezug auf numerische Werte der messbaren Metriken in Bezug auf die Netzwerkelemente basierend auf dem generierten Ontologieschema und dem empfangenen Dienstbereitstellungsmodell (324); und
Senden des Netzwerkdienstüberwachungsmodells (326) an einen Orchestrator (350) zur Instanziierung in dem Netzwerk, in dem der angeforderte Dienst bereitgestellt werden soll.

8. System nach Anspruch 7, wobei der Überwachungsmodellgenerator (310) ferner zu Folgendem ausgelegt ist:
Empfangen einer Dienstgütevereinbarung (328) von einem Betreiber (340), die messbare Metriken und Bedingungen in Bezug auf die messbaren Metriken identifiziert, wobei die Netzwerkelemente und die messbaren Metriken in Bezug auf die Netzwerkelemente zum Überwachen des angeforderten Netzwerkdiensts ferner basierend auf der empfangenen Dienstgütevereinbarung (328) bestimmt werden.

9. System nach einem der Ansprüche 7 und 8, ferner umfassend:
einen Bereitstellungsmodellgenerator (330), der zu Folgendem ausgelegt ist:
Senden des Dienstbereitstellungsmodells (324) an einen weiteren Orchestrator (360) zur Instanziierung in dem Netzwerk, in dem der angeforderte Dienst bereitgestellt werden soll.

10. Netzwerkknoten (400) zum Generieren eines Netzwerkdienstüberwachungsmodells für einen angeforderten Netzwerkdienst, wobei der Netzwerkknoten (400) Verarbeitungsschaltungsanordnung (410) und einen Speicher (420) umfasst, wobei der Speicher (420) Anweisungen (430) enthält, die von der Verarbeitungsschaltungsanordnung (410) ausgeführt werden können, wodurch der Netzwerkknoten (400) für Folgendes betrieben werden kann:
Empfangen eines Informationsmodells, das messbare Metriken in Bezug auf ein Netzwerk identifiziert, in dem der angeforderte Netzwerkdienst bereitgestellt werden soll;
Bestimmen von Netzwerkelementen und messbaren Metriken in Bezug auf die Netzwerkelemente, um den angeforderten Netzwerkdienst zu überwachen, basierend auf dem empfangenen Informationsmodell;
Generieren eines Ontologieschemas, das die messbaren Metriken in Bezug auf die Netzwerkelemente sowie Bedingungen und Argumente in Bezug auf die messbaren Metriken in Bezug auf die Netzwerkelemente identifiziert, basierend auf den Netzwerkelementen und den bestimmten messbaren Metriken in Bezug auf die Netzwerkelemente;
Empfangen eines Dienstbereitstellungsmodells für den angeforderten Netzwerkdienst, wobei das Dienstbereitstellungsmodell einen Netzwerkdiensttyp, Einschränkungen und Verbindungspunkte für den angeforderten Netzwerkdienst identifiziert;
Generieren des Netzwerkdienstüberwachungsmodells mit Bedingungen in Bezug auf numerische Werte der messbaren Metriken in Bezug auf die Netzwerkelemente basierend auf dem generierten Ontologieschema und dem empfangenen Dienstbereitstellungsmodell; und
Senden des Dienstbereitstellungsmodells an einen Orchestrator zur Instanziierung in dem Netzwerk, in dem der angeforderte Dienst bereitgestellt werden soll.

11. Netzwerkknoten nach Anspruch 10, der ferner für Folgendes betrieben werden kann:
Empfangen einer Dienstgütevereinbarung, die messbare Metriken und Bedingungen in Bezug auf die messbaren Metriken identifiziert,
wobei die Netzwerkelemente und die messbaren Metriken in Bezug auf die Netzwerkelemente zum Überwachen des angeforderten Netzwerkdiensts ferner basierend auf der empfangenen Dienstgütevereinbarung bestimmt werden.

12. Netzwerkknoten nach einem der Ansprüche 10 und 11, wobei die Netzwerkelemente eines oder mehrere von einer virtuellen Netzwerkfunktion, einer physischen Netzwerkfunktion, einer Cloud-nativen Netzwerkfunktion und einer virtuellen Verbindung umfassen.

13. Netzwerkknoten nach einem der Ansprüche 10-12, wobei die messbaren Metriken in Bezug auf die Netzwerkelemente eines oder mehrere von Paketverlust, Durchsatz, Verzögerung, Bitrate und Stillstanddauer umfassen und wobei das Netzwerküberwachungsmodell Bedingungen in Bezug auf das eine oder die mehreren von Paketverlust, Durchsatz, Verzögerung, Bitrate und Stillstanddauer umfasst.

14. Computerprogramm, umfassend Anweisungen (430), die bei Ausführung durch Verarbeitungsschaltungsanordnung (410) die Verarbeitungsschaltungsanordnung (410) zum Durchführen des Verfahrens nach einem der Ansprüche 1-6 veranlassen.

15. Computerprogrammprodukt (420), das ein Computerprogramm darauf gespeichert aufweist, das Anweisungen (430) umfasst, die bei Ausführung durch Verarbeitungsschaltungsanordnung (410) die Verarbeitungsschaltungsanordnung (410) zum Durchführen des Verfahrens nach einem der Ansprüche 1-6 veranlassen.

## Revendications

1. Procédé mis en œuvre par ordinateur pour générer un modèle de surveillance de service de réseau pour un service de réseau demandé, le procédé comprenant les étapes suivantes réalisées par un générateur de modèle de surveillance :
la réception (S110) d'un modèle d'informations identifiant des métriques mesurables en ce qui concerne un réseau dans lequel le service de réseau demandé doit être déployé ;
la détermination (S120), sur la base du modèle d'informations reçu, d'éléments de réseau et de métriques mesurables en ce qui concerne les éléments de réseau pour surveiller le service de réseau demandé ;
la génération (S130), sur la base des éléments de réseau déterminés et des métriques mesurables déterminées en ce qui concerne les éléments de réseau, d'un schéma d'ontologie identifiant les métriques mesurables en ce qui concerne les éléments de réseau, et des conditions et des arguments concernant les métriques mesurables en ce qui concerne les éléments de réseau ;
la réception (S140) d'un modèle de déploiement de service pour le service de réseau demandé, le modèle de déploiement de service identifiant un type de service de réseau, des contraintes et des points de connexion pour le service de réseau demandé ;
la génération (S150), sur la base du schéma d'ontologie généré et du modèle de déploiement de service reçu, du modèle de surveillance de service de réseau présentant des conditions concernant des valeurs numériques des métriques mesurables en ce qui concerne les éléments de réseau ; et
la transmission (S160) du modèle de surveillance de service de réseau à un orchestrateur pour l'instancier dans le réseau dans lequel le service de réseau demandé doit être déployé.

2. Procédé selon la revendication 1, comprenant en outre les étapes suivantes réalisées par le générateur de modèle de surveillance :
la réception (S112) d'un accord de niveau de service identifiant des métriques mesurables et des conditions concernant les métriques mesurables,
dans lequel la détermination (S120) des éléments de réseau et des métriques mesurables en ce qui concerne les éléments de réseau pour surveiller le service de réseau demandé est en outre basée sur l'accord de niveau de service reçu.

3. Procédé selon l'une quelconque des revendications 1 et 2, comprenant en outre l'étape suivante réalisée par un générateur de modèle de déploiement :
la transmission (S166) du modèle de déploiement de service à un orchestrateur pour l'instancier dans le réseau dans lequel le service de réseau demandé doit être déployé.

4. Procédé selon l'une quelconque des revendications 1 à 3, dans lequel les éléments de réseau comprennent une ou plusieurs parmi une fonction de réseau virtuelle, une fonction de réseau physique, une fonction de réseau native cloud et une liaison virtuelle.

5. Procédé selon l'une quelconque des revendications 1 à 4, dans lequel les métriques mesurables en ce qui concerne les éléments de réseau comprennent un ou plusieurs parmi une perte de paquets, une capacité de traitement, un retard, un débit binaire et une durée de décrochage, et dans lequel le modèle de surveillance de réseau comprend des conditions en ce qui concerne les un ou plusieurs parmi une perte de paquets, une capacité de traitement, un retard, un débit binaire et une durée de décrochage.

6. Procédé selon l'une quelconque des revendications 1 à 5, comprenant en outre les étapes suivantes réalisées par un orchestrateur :
la réception (S162) du modèle de surveillance de service de réseau ; et
l'instanciation (S164) du modèle de surveillance de service de réseau reçu dans le réseau dans lequel le service de réseau demandé doit être déployé.

7. Système (300) pour générer un modèle de surveillance de service de réseau pour un service de réseau demandé, le système comprenant :
un générateur de modèle de surveillance (310) adapté pour :
recevoir, depuis un référentiel de modèles d'informations (320), un modèle d'informations (322) identifiant des métriques mesurables en ce qui concerne un réseau dans lequel le service de réseau demandé doit être déployé ;
déterminer, sur la base du modèle d'informations (322) reçu, des éléments de réseau et des métriques mesurables en ce qui concerne les éléments de réseau pour surveiller le service de réseau demandé ;
générer, sur la base des éléments de réseau déterminés et des métriques mesurables déterminées en ce qui concerne les éléments de réseau, un schéma d'ontologie identifiant les métriques mesurables en ce qui concerne les éléments de réseau, et des conditions et des arguments concernant les métriques mesurables en ce qui concerne les éléments de réseau ;
recevoir un modèle de déploiement de service (324) pour le service de réseau demandé, le modèle de déploiement de service (324) identifiant un type de service de réseau, des contraintes et des points de connexion pour le service de réseau demandé ;
générer, sur la base du schéma d'ontologie généré et du modèle de déploiement de service (324) reçu, le modèle de surveillance de service de réseau (326) présentant des conditions concernant des valeurs numériques des métriques mesurables en ce qui concerne les éléments de réseau ; et
transmettre le modèle de surveillance de service de réseau (326) à un orchestrateur (350) pour l'instancier dans le réseau dans lequel le service de réseau demandé doit être déployé.

8. Système selon la revendication 7, dans lequel le générateur de modèle de surveillance (310) est en outre adapté pour :
recevoir, depuis un opérateur (340), un accord de niveau de service (328) identifiant des métriques mesurables et des conditions concernant les métriques mesurables, dans lequel les éléments de réseau et les métriques mesurables en ce qui concerne les éléments de réseau pour surveiller le service de réseau demandé sont déterminés en outre sur la base de l'accord de niveau de service (328) reçu.

9. Système selon l'une quelconque des revendications 7 et 8, comprenant en outre :
un générateur de modèle de déploiement (330) adapté pour :
transmettre le modèle de déploiement de service (324) à un orchestrateur (360) pour l'instancier dans le réseau dans lequel le service de réseau demandé doit être déployé.

10. Nœud de réseau (400) pour générer un modèle de surveillance de service de réseau pour un service de réseau demandé, le nœud de réseau (400) comprenant une circuiterie de traitement (410) et une mémoire (420), ladite mémoire (420) contenant des instructions (430) exécutables par ladite circuiterie de traitement (410), selon lesquelles ledit nœud de réseau (400) est fonctionnel pour :
recevoir un modèle d'informations identifiant des métriques mesurables en ce qui concerne un réseau dans lequel le service de réseau demandé doit être déployé ;
déterminer, sur la base du modèle d'informations reçu, des éléments de réseau et des métriques mesurables en ce qui concerne les éléments de réseau pour surveiller le service de réseau demandé ;
générer, sur la base des éléments de réseau déterminés et des métriques mesurables déterminées en ce qui concerne les éléments de réseau, un schéma d'ontologie identifiant les métriques mesurables en ce qui concerne les éléments de réseau, et des conditions et des arguments concernant les métriques mesurables en ce qui concerne les éléments de réseau ;
recevoir un modèle de déploiement de service pour le service de réseau demandé, le modèle de déploiement de service identifiant un type de service de réseau, des contraintes et des points de connexion pour le service de réseau demandé ;
générer, sur la base du schéma d'ontologie généré et du modèle de déploiement de service reçu, le modèle de surveillance de service de réseau présentant des conditions concernant des valeurs numériques des métriques mesurables en ce qui concerne les éléments de réseau ; et
transmettre le modèle de déploiement de service à un orchestrateur pour l'instancier dans le réseau dans lequel le service de réseau demandé doit être déployé.

11. Nœud de réseau selon la revendication 10, fonctionnel en outre pour :
recevoir un accord de niveau de service identifiant des métriques mesurables et des conditions concernant les métriques mesurables,
dans lequel les éléments de réseau et les métriques mesurables en ce qui concerne les éléments de réseau pour surveiller le service de réseau demandé sont déterminés en outre sur la base de l'accord de niveau de service reçu.

12. Nœud de réseau selon l'une quelconque des revendications 10 et 11, dans lequel les éléments de réseau comprennent une ou plusieurs parmi une fonction de réseau virtuelle, une fonction de réseau physique, une fonction de réseau native cloud et une liaison virtuelle.

13. Nœud de réseau selon l'une quelconque des revendications 10 à 12, dans lequel les métriques mesurables en ce qui concerne les éléments de réseau comprennent un ou plusieurs parmi une perte de paquets, une capacité de traitement, un retard, un débit binaire et une durée de décrochage, et dans lequel le modèle de surveillance de réseau comprend des conditions en ce qui concerne les un ou plusieurs parmi une perte de paquets, une capacité de traitement, un retard, un débit binaire et une durée de décrochage.

14. Programme informatique comprenant des instructions (430) qui, lorsqu'elles sont exécutées par une circuiterie de traitement (410), amènent la circuiterie de traitement (410) à réaliser le procédé selon l'une quelconque des revendications 1 à 6.

15. Produit programme informatique (420) sur lequel est stocké un programme informatique comprenant des instructions (430) qui, lorsqu'elles sont exécutées par une circuiterie de traitement (410), amènent la circuiterie de traitement (410) à réaliser le procédé selon l'une quelconque des revendications 1 à 6.
